# EUROPÄISCHE PATENTANMELDUNG

(11) **EP 2 402 211 A1**
(43) Veröffentlichungstag der Anmeldung: **04.01.2012**
(21) Anmeldenummer: 11003082.2
(22) Anmeldetag: 12.04.2011
(51) Int. Cl.: B60P 3/22, B65D 88/54

(54) **Notfallentleerung für Tankfahrzeug**

(30) Priorität: 29.06.2010 DE 102010025590
(71) Anmelder: Nutzfahrzeuge Rohr GmbH, 94315 Straubing (DE)
(72) Erfinder: Pfeiffer, Franz, 89165 Dietenheim (DE)
(74) Vertreter: advotec.

(57) **Zusammenfassung**

Die vorliegende Erfindung betrifft ein Tankfahrzeug mit einem Tank für Flüssigkeiten, insbesondere Kraftstoffe, gekennzeichnet durch mindestens zwei, sich jeweils von einer Öffnung (5) in der Tankwand (4) in das Tankinnere erstreckende Innenleitungen (7a, 7b), die sich im Tankinneren mindestens teilweise in unterschiedliche Richtungen erstrecken, wobei die Enden (8a, 8b) der Innenleitungen im Tanköffnungsbereich für einen Nichteinsatzzustand verschließbar sind und für die Überführung vom Nichteinsatzzustand in einen Einsatzzustand mit einer Außenleitung (14a) zum Entleeren der Tankflüssigkeit bzw. mit einer Außenleitung (14b) zum Belüften des Tankinneren koppelbar sind.

## Beschreibung

Die vorliegende Erfindung betrifft ein Tankfahrzeug mit einem Tank für Flüssigkeiten, insbesondere Kraftstoffe.

Bei Unfällen mit Tankfahrzeugen kommt es immer wieder zu Problemen bei der Tankentleerung. Hierzu gibt es vom Gesetzgeber keinerlei Vorgaben, wie eine Versorgung der verunfallten Fahrzeuge zu erfolgen hat. Bei Unfällen, bei denen die Tankfahrzeuge umstürzen, fallen diese zu ca. 90% auf die rechte oder linke Fahrzeugseite.

Bisher sind verunfallte Fahrzeuge in der Regel über das Öffnen der Domdeckel oder über Notbohrungen, die in die Tankwand eingebohrt wurden, entleert worden. Bei dieser Vorgehensweise fließen oft erhebliche Mengen des Tankinhalts unkontrolliert aus. Hierbei kommt es oftmals zu erheblichen Umweltverschmutzungen, beispielsweise durch in das Grundwasser eindringende giftige Flüssigkeiten (z. B. Kraftstoffe). Neben den ökologischen Problemen verursacht ein derartiges Auslaufen gefährlicher Flüssigkeiten gewaltige ökonomische Probleme, zum einen durch das Reinigen der Umwelt und zum anderen durch die oft großen Mengen an verschwendetem Flüssigmaterial.

Der vorliegenden Erfindung liegt die Aufgabe zugrunde, ein Tankfahrzeug zur Verfügung zu stellen, bei dem im umgekippten Zustand ein schnelles und sicheres Entleeren des Tankes möglich ist, wobei es keine Rolle spielt, ob das Tankfahrzeug beim Unfall auf die rechte oder linke Fahrzeugseite fällt.

Diese Aufgabe wird gelöst durch ein Tankfahrzeug der eingangs genannten Art, welches gekennzeichnet ist durch mindestens zwei, sich jeweils von einer Öffnung im Tank in das Tankinnere erstreckende Innenleitungen, die sich im Tankinneren mindestens teilweise in unterschiedliche Richtungen erstrecken, wobei die Enden dieser Leitungen im Tanköffnungsbereich im Nichteinsatzzustand verschlossen sind und für die Überführung vom Nichteinsatzzustand in einen Einsatzzustand jeweils mit einer Außenleitung zum Entleeren der Tankfüllung bzw. zum Belüften des Tankinneren koppelbar sind.

Durch eine Kopplung der festinstallierten Innenleitungen mit Außenleitungen im Falle eines Unfalles mit umgekipptem Tankfahrzeug kann auf einfache Art und Weise eine Leitung zum Entleerung des Tankes, welche von einer Innenleitung und einer damit gekoppelten Außenleitung gebildet wird, geschaffen werden. Zudem kann ebenfalls einfach und schnell eine Leitung zum Belüften des Tankinneren geschaffen werden, die sich aus einer Innenleitung und einer daran angekoppelten Außenleitung zusammensetzt. Welche der beiden Innenleitungen für die Bildung einer Gesamtleitung zum Entleeren des Tankinneren bzw. zum Belüften des Tankinneren verwendet wird, hängt davon ab, auf welcher Fahrzeugseite das Tankfahrzeug zum Liegen kommt. Diejenige Innenleitung, deren freies Ende aus dem flüssigen Tankinneren herausragt, wird als Belüftungsleitung verwendet. Die andere Innenleitung wird dagegen zur Bildung einer Entleerungsleitung verwendet.

Bei einer besonders bevorzugten Ausführungsform des erfindungsgemäßen Tankfahrzeuges erstrecken sich die Innenleitungen von einer Öffnung im oberen Scheitelbereich des Tanks aus in unterschiedliche Richtungen, wobei die freien Enden dieser Leitungen im Tankinneren (im normalen Fahrzustand des Tankfahrzeuges) vorzugsweise im Bereich des rechten bzw. linken Seitenbereichs des Tanks positioniert sind. Durch diese Anordnung der Innenleitungen ist sichergestellt, dass ein reibungsloses Entleeren eines umgestürzten Tankfahrzeuges möglich ist. Dabei ist es egal, ob das Tankfahrzeug auf die linke oder rechte Fahrzeugseite fällt. In der Regel ist bei dieser Anordnung gewährleistet, dass zumindest das freie Ende einer der Innenleitungen aus dem flüssigen Inhalt des Tanks herausragt, wohingegen sich das freie Ende der anderen Innenleitung in der Flüssigkeit befindet.

Bei einer bevorzugten Ausführungsform des erfindungsgemäßen Tankfahrzeuges ist mindestens eine Öffnung in der Tankwand, vorzugsweise im oberen Scheitelbereich des Tanks vorgesehen, in welche ein Verschlusssystem, umfassend ein unteres Verschlusselement sowie ein mit dem unteren Verschlusselement verbundenes oberes Verschlusselement integriert ist, wobei das untere Verschlusselement zwei Aussparungen aufweist, an die die beiden Innenleitungen angeschlossen sind, und wobei das obere Verschlusselement zwei Aussparungen aufweist, an die die beiden Außenleitungen anschließbar sind, wobei das obere Verschlusselement im Nichteinsatzzustand (normaler Fahrzustand) so positioniert ist, dass die Aussparungen des oberen und unteren Verschlusselements nicht überlappen und die Öffnung in der Tankwand verschlossen ist, und wobei das obere Verschlusselement zur Überführung des Verschlusssystems vom Nichteinsatzzustand in einen Einsatzzustand (Unfallzustand) derart in der Position veränderbar ist, dass die Aussparungen im oberen Verschlusselement über den Aussparungen im unteren Verschlusselement angeordnet sind. Durch ein derartiges Verschlusssystem, welches in den Figuren und in der Figurenbeschreibung detailliert dargestellt ist, ist ein äußerst einfaches und schnelles Koppeln der Innenleitungen mit den Außenleitungen möglich. So können im geschlossenen Zustand des Verschlusssystems die Außenleitungen am oberen Verschlusselement angekoppelt werden bevor dieses (insbesondere durch Verdrehen) derart in der Position verändert wird, dass ein Koppeln der Innenleitungen mit den Außenleitungen erfolgen kann.

Mit Vorteil sind die Verschlusselemente mindestens teilweise plattenartig, vorzugsweise als Flansche ausgebildet. Durch diese plattenartige Ausbildung der Verschlusselemente können diese besonders einfach gegeneinander verdreht werden, so dass das Verschlusssystem schnell und einfach von einem Nichteinsatzzustand in einen Einsatzzustand überführt werden kann.

In der Regel sind die Innenleitungen in die Aussparungen des unteren Verschlusselements eingeschweißt oder eingeschraubt.

Die Außenleitungen sind auf einfache Art und Weise mit den Aussparungen im oberen Verschlusselement des Verschlusssystems koppelbar. Vorzugsweise sind die Aussparungen im oberen Verschlusselement Gewindebohrungen, in welche die Außenleitungen einschraubbar sind. Dadurch wird eine besonders einfache Ankopplung der Außenleitung an die Aussparungen des oberen Verschlusselements erreicht.

Vorzugsweise sind die Verschlusselemente des Verschlusssystems mittels Schrauben miteinander verbunden, wobei zum Überführen des Verschlusssystems vom Nichteinsatzzustand in den Einsatzzustand die Schrauben gelockert werden und das obere Verschlusselement vorzugsweise um ca. 90° verdreht wird, um die Aussparungen der Verschlusselemente in Deckung miteinander zu bringen. Vor dem Verdrehen des oberen Verschlusselements werden in der Regel die Außenleitungen an das obere Verschlusselement angekoppelt.

Mit Vorteil sind die Innenleitungen Rohrleitungen, vorzugsweise Rohrleitungen aus Kunststoff oder Metall. Der Vorteil von Rohrleitungen liegt insbesondere darin, dass diese starr ausgebildet sind und auch bei einem Umkippen des Tankfahrzeuges in Position bleiben.

In der Regel ist je Tankabteil eine Notfallentleerung vorgesehen. Eine Notfallentleerungsvorrichtung umfasst insbesondere die oben genannten Innenleitungen, die sich von einer Öffnung in der Tankwand in das Tankinnere erstrecken. Vorzugsweise umfasst eine Notfallentleerungseinrichtung auch das oben genannte Verschlusssystem.

Die vorliegende Erfindung betrifft ferner ein Verfahren zum Entleeren des Tanks eines auf eine Fahrzeugseite gefallenen Tankfahrzeuges, welches ein Verschlusssystem nach einem der Ansprüche 3 bis 9 aufweist, mit folgenden Schritten:
a) Anschließen einer Belüftungsleitung bzw. Entleerungsleitung an die Aussparungen im oberen Verschlusselement im verschlossenen Zustand des Verschlusssystems;
b) Lockern der Verbindung zwischen dem oberen und unteren Verschlusselement;
c) Drehen des oberen Verschlusselements bis die Aussparungen des oberen Verschlusselements über den Aussparungen des unteren Verschlusselements liegen
   und es zu einer Kopplung zwischen den Innenleitungen und den Außenleitungen (Belüftungsleitung und Entleerungsleitung) kommt;
d) Entleeren des Tanks mittels Schwerkraft oder Pumpe über die Entleerungsleitung.

Mit Hilfe des erfindungsgemäßen Verfahrens können bei einem verunfallten Tankfahrzeug, das auf eine Fahrzeugseite gefallen ist, in Ruhe und ohne Inhaltsverlust zunächst die Außenleitungen (Belüftungsleitung bzw. Entleerungsleitung) an die Aussparungen im oberen Verschlusselement des Verschlusssystems angeschlossen werden. Erst wenn die Außenleitungen angeschlossen sind, werden diese durch Drehen des oberen Verschlusselements mit den Innenleitungen gekoppelt, sodass geschlossene, vom Inneren des Tanks nach außen führende Leitungen gebildet werden. Anschließend kann der Tankinhalt auf einfache Art und Weise vom Tankinneren nach außen befördert werden.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

In den Zeichnungen zeigen:
- Figur 1:: eine Rückseitenansicht eines erfindungsgemäßen Tankfahrzeuges mit transparent dargestelltem Tank;
- Figur 2:: das Tankfahrzeug von Figur 1 im verunfallten Zustand mit angeschlossenen Außenleitungen;
- Figur 3a, 3b:: eine Draufsicht auf das Verschlusssystem des Tankfahrzeugs von Figur 1 im Nichteinsatzzustand (Figur 3a) bzw. im Einsatzzustand (Figur 3b);
- Figur 4a, 4b:: Querschnitte durch das Verschlusssystem der Figuren 3a und 3b;

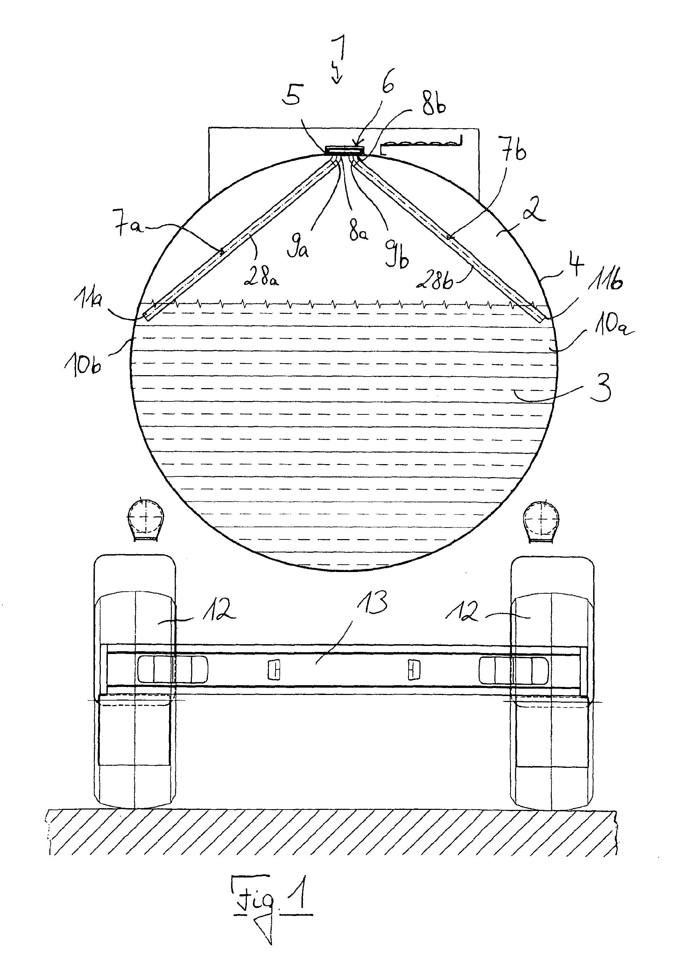

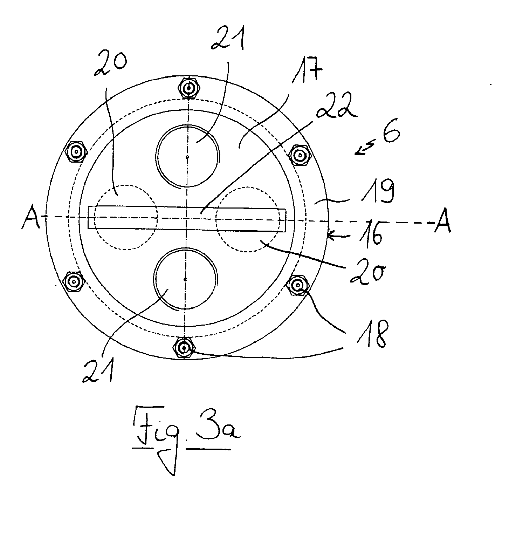

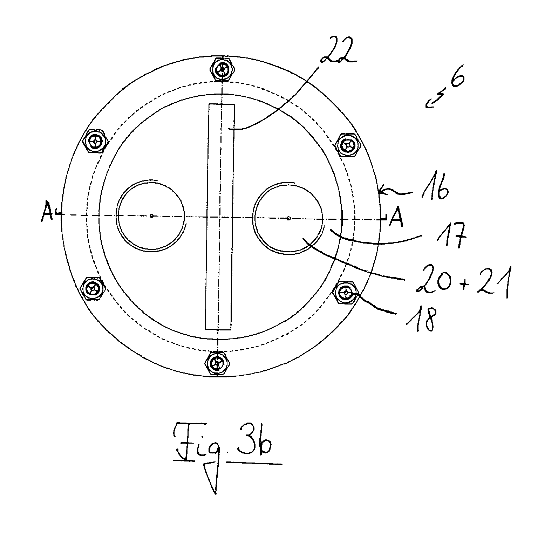

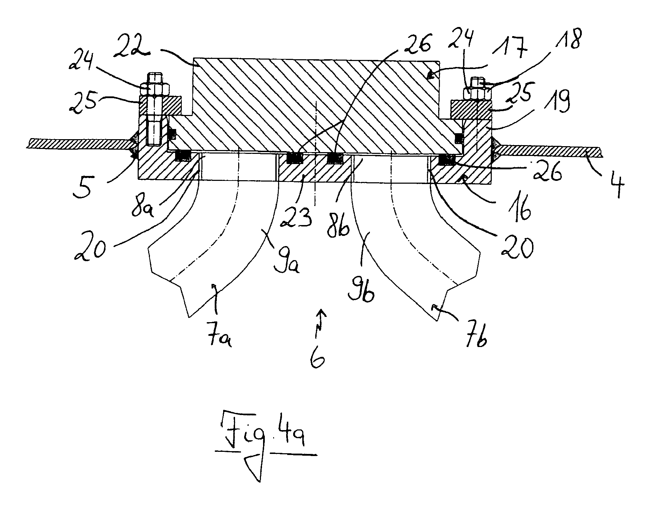

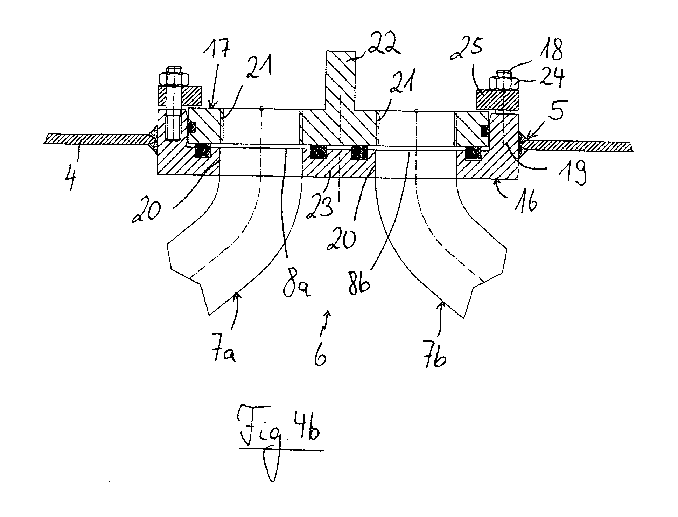

Figur 1 zeigt eine Rückseitenansicht eines erfindungsgemäßen Tankfahrzeuges 1 mit einem Tank 2, in dem Benzin 3 enthalten ist. In der Tankwand 4 ist eine Öffnung 5 eingebracht, in die ein Verschlusssystem 6 eingeschweißt ist. Das Verschlusssystem 6 ist in den Figuren 3a, 3b, 4a, 4b detailliert dargestellt und unten beschrieben. Von der Öffnung 5 bzw. vom Verschlusssystem 6 aus erstrecken sich zwei Innenleitungen 7a und 7b in das Tankinnere. Die Leitungen 7a und 7b sind mit dem Verschlusssystem 6 verschweißt. Die mit dem Verschlusssystem 6 verbundenen Enden 8a und 8b der Innenleitungen 7a und 7b sind in dem hier gezeigten Nichteinsatzzustand durch das Verschlusssystem 6 verschlossen. Vom Verschlusssystem 6 aus zeigen die Innenleitungen 7a und 7b zunächst jeweils eine Biegung 9a und 9b, die in entgegengesetzte Richtungen verlaufen. Die sich an die Biegungen 9a und 9b anschließenden geraden Abschnitte 28a und 28b der Innenleitungen 7a und 7b laufen auf den rechten Seitenbereich 10a bzw. auf den linken Seitenbereich 10b des Tanks 2 zu, wobei die freien Enden 11a und 11 b der Leitungen 7a und 7b kurz vor dem rechten bzw. linken Tankwand-Seitenbereich des Tank 2 positioniert sind. Die Abschnitte 28a, 28b können auch gebogen ausgebildet sein und beispielsweise an der Tankwand entlang führen. Die Innenleitungen 7a und 7b sind im vorliegenden Ausführungsbeispiel aus Edelstahl gefertigt. In dieser Darstellung sind ferner beispielsweise die Hinterreifen 12 und die Stoßstange (hinterer Unterfahrschutz) 13 des Tankfahrzeugs 1 gezeigt. Der Tank 2 ist in der vorliegenden Darstellung zu etwa zwei Dritteln mit Benzin 3 gefüllt. Aus Sicherheitsgründen ist der Tank 2 nicht komplett mit brennbarer Flüssigkeit, wie beispielsweise Benzin gefüllt.

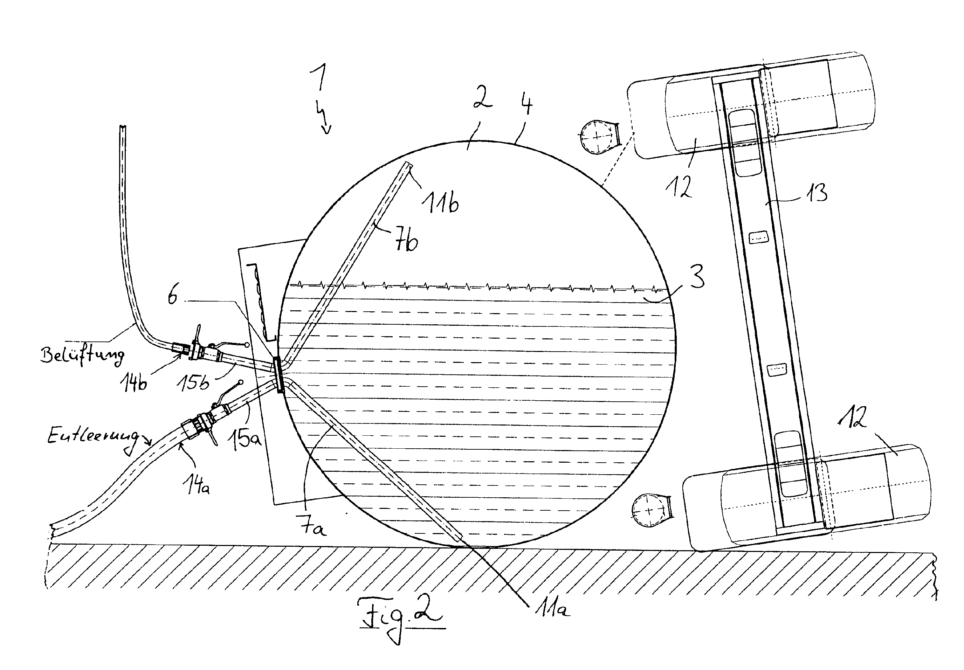

Figur 2 zeigt das Tankfahrzeug 1 nach einem Unfall, wobei das Tankfahrzeug 1 umgekippt ist und auf der linken Fahrzeugseite (von hinten betrachtet) liegt. In diesem hier gezeigten Einsatzzustand sind die Innenleitungen 7a und 7b mit Außenleitungen 14a, 14b gekoppelt.

In diesem umgekippten Zustand des Tankfahrzeuges 1 befindet sich das freie Ende 11a der Innenleitung 7a fast am tiefstmöglichen Punkt im Tank 2. Dagegen befindet sich das freie Ende 11b der Innenleitung 7b fast am höchsten Punkt im Tank und ragt somit aus dem Benzin 3 im Inneren des Tanks 2 heraus.

Im hier gezeigten Einsatzzustand bildet die Innenleitung 7a zusammen mit der Außenleitung 14a eine Entleerungsleitung. Dagegen bildet die Innenleitung 7b zusammen mit der Außenleitung 14b eine Belüftungsleitung. Die Außenleitungen weisen einen starren Abschnitt 15a und 15b auf, wobei die Enden dieser starren Abschnitte 15a und 15b mit dem Verschlusssystem 6 verschraubt sind (Details siehe unten). In dem hier dargestellten Einsatzzustand mit den miteinander gekoppelten Innen- und Außenleitungen ist ein einfaches Entleeren des Tankinneren möglich.

Figur 3a zeigt eine Draufsicht auf das Verschlusssystem 6 des Tankfahrzeuges 1 der Figuren 1 und 2. Wie bereits in den Figuren 1 und 2 dargestellt, ist das Verschlusssystem 6 im Scheitelbereich des Tanks 2 in dessen Tankwand 4 eingeschweißt. Das Verschlusssystem 6 umfasst einen unteren Flansch 16 (Basisflansch) sowie einen oberen Flansch 17 (Verschlussflansch). Der Basisflansch 16 ist mit dem Verschlussflansch 17 mittels Schrauben 18 mittelbar verbunden (siehe Figuren 4a und 4b). Der Basisflansch 16 weist einen größeren Durchmesser auf als der Verschlussflansch 17. Der Basisflansch 16 weist einen hochgezogenen Rand 19 auf, der als Anschlag für den auf dem Basisflansch 16 positionierten Verschlussflansch 17 bildet (siehe Figuren 4a und 4b).

Der Basisflansch weist zwei Aussparungen 20 auf, die in der vorliegenden Figur 3a mit gestrichelter Linie dargestellt sind, da diese Aussparungen 20 vom Verschlussflansch 17 verdeckt werden und daher im hier gezeigten Zustand des Verschlusssystems nicht zu sehen sind. An die Aussparungen 20 sind die hier nicht zu sehenden Innenleitungen 7a und 7b angeschlossen.

Der Verschlussflansch 17 weist zwei Gewindebohrungen 21 auf, an die die Außenleitungen 14a und 14b anschließbar sind. Die Verbindungslinien zwischen den Mittelpunkten der beiden Aussparungen 20 und den Mittelpunkten der Aussparungen 21 bilden einen rechten Winkel miteinander. Am Verschlussflansch 17 ist ferner ein Griff 22 angeordnet und mit diesem einstückig verbunden.

Figur 3b zeigt das Verschlusssystem 6 im Einsatzzustand. Zur Überführung des Verschlusssystems 6 vom Nichteinsatzzustand (Figur 3a) in den Einsatzzustand (Figur 3b) werden zunächst die Schrauben 18, welche den Basisflansch 16 mit dem Verschlussflansch 17 verbinden, gelockert. Anschließend wird der Verschlussflansch 17 mittels Griff 22 um 90° verdreht. In dieser verdrehten Stellung liegen die Aussparungen 20 und 21 der beiden Flansche 16 und 17 genau übereinander. Vor dem Lockern der Schrauben und dem Verdrehen des Verschlussflansches 17 werden in aller Regel die Außenleitungen 14a und 14b in die Gewindebohrungen 21 im Verschlussflansch 17 eingeschraubt. Beim Drehen des Verschlussflansches 17 um 90° werden somit die Außenleitungen 14a und 14b mit den Innenleitungen 7a und 7b gekoppelt.

In Figur 4a ist ein Querschnitt durch das Verschlusssystem 6 aus Figur 3a entlang der Linie A-A dargestellt. Wie bereits oben erwähnt, wird hier der Nichteinsatzzustand des Verschlusssystems 6 wiedergegeben. In dieser Stellung der beiden Flansche 16 und 17 werden die oberen Enden 8a und 8b der Innenleitungen 7a und 7b durch den Verschlussflansch 17 verschlossen. Die Aussparungen 20 im Basisflansch 16, in welche die Innenleitungen 7a und 7b eingeschweißt sind, sind vom Verschlussflansch 17 bedeckt. In dieser Darstellung ist gut der hochgezogene Rand 19 des Basisflansches 16 zu erkennen, der als erhabener Ring als Anschlag für den Verschlussflansch 17 dient. Der Basisflansch 16 mit seiner als runde Scheibe ausgebildeten Basisplatte 23 und dem hochgezogenen Rand 19 bildet quasi einen Aufnahmeteller zur Aufnahme des Verschlussflansches 17. Der Verschlussflansch 17 ist am Basisflansch 16 mittels Schrauben befestigt. Diese Schrauben 18 befinden sich in Gewinden im hochgezogenen Rand 19 des Basisflansches 16. Über Schraubenmuttern 24 und einem Haltering 25 sind die Flansche 16 und 17 miteinander verbunden. In Figur 4a ist die genannte Schraubverbindung zwischen den Flanschen 16 und 17 festgezogen, so dass die beiden Flansche 16 und 17 fest miteinander verbunden sind und nicht gegeneinander verdreht werden können.

In Figur 4b ist ein Querschnitt entlang der Linie A-A aus Figur 3b gezeigt. In dieser Darstellung liegen die Aussparungen 20 des Basisflansches 16 direkt unter den Aussparungen 21 des Verschlussflansches 17. Die in der Regel bereits in die Aussparungen 21 des Verschlussflansches 17 eingeschraubten Außenleitungen sind hier nicht dargestellt. In diesem hier gezeigten Einsatzzustand bilden die Innenleitungen 7a und 7b mit den Außenleitungen 14a und 14b Entleerungsleitungen bzw. Belüftungsleitungen.

Um den Verschlussflansch 17 von dem in Figur 4a dargestellten Nichteinsatzzustand in den in Figur 4b gezeigten Einsatzzustand zu drehen, wurden die Schraubverbindungen zwischen dem Basisflansch 16 und dem Verschlussflansch 17 gelockert. In den Figuren 4a und 4b sind ferner Dichtungen zwischen den Flanschen 16 und 17 zu erkennen. Diese Dichtungen sind mit den Bezugszeichen 26 versehen.

Es ist nach dem Entleeren eines Tankes eines verunfallten Tankfahrzeuges in einfacher Art und Weise möglich, das Verschlusssystem 6 vom Einsatzzustand in einen Nichteinsatzzustand zu überführen. Dies erfolgt in einfacher Art und Weise durch ein weiteres Verdrehen des Verschlussflansches 17 um 90°. Ein derartiges Verdrehen überführt das Verschlusssystem 6 vom Einsatzzustand wiederum in einen Nichteinsatzzustand, in welchem die Aussparungen 20 und 21 der Flansche 16 und 17 sich nicht mehr überdecken.

Das Verschlusssystem 6 ist derart in die Tankwand 4 integriert (verschweißt), dass die Aussparungen 20 im Basisflansch 16 rechts bzw. links neben der Längsachse des Tanks 2 positioniert sind. Fällt das Tankfahrzeug 1 bei einem Umfall beispielsweise auf die linke Fahrzeugseite (wie in Figur 2 dargestellt), sind die Aussparungen 20 im Basisflansch 16 übereinander angeordnet. Die untere Aussparung 20 ist dann automatisch diejenige Aussparung, an die sich diejenige Innenleitung anschließt, deren freies Ende sich im Benzin befindet. Die darüber angeordnete Aussparung ist automatisch diejenige, an die sich die Innenleitung anschließt, deren freies Ende sich nicht im Benzin befindet. Daher ist die im Falle eines Unfalls untere Aussparung im Basisflansch 16 mit der Außenleitung 14a zum Entleeren des Tanks 2, und die darüber angeordnete Aussparung im Basisflansch 16 mit der Außenleitung 14b zum Belüften des Tankinneren zu koppeln.

## Patentansprüche

1. Tankfahrzeug mit einem Tank für Flüssigkeiten, insbesondere Kraftstoffe, **gekennzeichnet durch** mindestens zwei, sich jeweils von einer Öffnung (5, 20) in der Tankwand (4) in das Tankinnere erstreckende Innenleitungen (7a, 7b), die sich im Tankinneren mindestens teilweise in unterschiedliche Richtungen erstrecken, wobei die Enden (8a, 8b) der Innenleitungen im Tanköffnungsbereich für einen Nichteinsatzzustand verschließbar sind und für die Überführung vom Nichteinsatzzustand in einen Einsatzzustand jeweils mit einer Außenleitung (14a, 14b) zum Entleeren der Tankflüssigkeit bzw. zum Belüften des Tankinneren koppelbar sind.

2. Tankfahrzeug nach Anspruch 1, **dadurch gekennzeichnet, dass** sich die Innenleitungen (7a, 7b) von einer Öffnung (5, 20) im oberen Scheitelbereich des Tanks (2) aus in unterschiedliche Richtungen erstrecken, wobei die freien Enden (11a, 11b) dieser Leitungen im Tankinneren vorzugsweise im Bereich des rechten (10a) bzw. linken Seitenbereichs (10b) des Tanks (2) positioniert sind.

3. Tankfahrzeug nach einem der Ansprüche 1 oder 2, **dadurch gekennzeichnet, dass** in die Öffnung (5) in der Tankwand (4), vorzugsweise im oberen Scheitelbereich des Tanks (2) ein Verschlusssystem (6), umfassend ein unteres Verschlusselement (16) sowie ein mit dem unteren Verschlusselement verbundenes oberes Verschlusselement (17) integriert ist, wobei das untere Verschlusselement zwei Aussparungen (20) aufweist, an die die beiden Innenleitungen (7a, 7b) angeschlossen sind, und wobei das obere Verschlusselement zwei Aussparungen (21) aufweist, an die die beiden Außenleitungen (14a, 14b) anschließbar sind, wobei das obere Verschlusselement im Nichteinsatzzustand so positioniert ist, dass die Aussparungen des oberen und des unteren Verschlusselementes nicht überlappen und die Öffnung verschlossen ist, und wobei das obere Verschlusselement zur Überführung des Verschlusssystems (6) vom Nichteinsatzzustand in einen Einsatzzustand derart in der Position veränderbar ist, dass die Aussparungen im oberen Verschlusselement über den Aussparungen im unteren Verschlusselement angeordnet sind.

4. Tankfahrzeug nach Anspruch 3, **dadurch gekennzeichnet, dass** die Verschlusselemente mindestens teilweise plattenartig, vorzugsweise als Flansche (16, 17) ausgebildet sind.

5. Tankfahrzeug nach einem der Ansprüche 3 oder 4, **dadurch gekennzeichnet, dass** die Innenleitungen (7a, 7b) in die Aussparungen (20) des unteren Verschlusselements (16) eingeschweißt oder eingeschraubt sind.

6. Tankfahrzeug nach einem der Ansprüche 3 bis 5, **dadurch gekennzeichnet, dass** die Aussparungen (21) im oberen Verschlusselement (17) Gewindebohrungen sind, in welche die Außenleitungen (14a, 14b) einschraubbar sind.

7. Tankfahrzeug nach einem der Ansprüche 3 bis 6, **dadurch gekennzeichnet, dass** die Verschlusselemente (16, 17) mittels Schrauben (18) miteinander verbunden sind, wobei zum Überführen des Verschlusssystems (6) vom Nichteinsatzzustand in den Einsatzzustand die Schrauben gelockert werden und das obere Verschlusselement (17) vorzugsweise um ca. 90° verdreht wird, um die Aussparungen (20, 21) der Verschlusselemente (16, 17) in Deckung miteinander zu bringen.

8. Tankfahrzeug nach einem der vorhergehenden Ansprüche, **dadurch gekennzeichnet, dass** die Innenleitungen Rohrleitungen (7a, 7b), vorzugsweise Rohrleitungen aus Kunststoff oder Metall sind.

9. Tankfahrzeug nach einem der vorhergehenden Ansprüche, **dadurch gekennzeichnet, dass** je Tankabteil eine Notfallentleerungseinrichtung vorgesehen ist.

10. Verfahren zum Entleeren des Tankes eines auf eine Fahrzeugseite gefallenen Tankfahrzeuges, welches ein Verschlusssystem (6) nach einem der Ansprüche 3 bis 9 aufweist, mit folgenden Schritten:
a) Anschließen einer Belüftungsleitung (14b) bzw. einer Entleerungsleitung (14a) an die Aussparungen (21) im oberen Verschlusselement (17) im verschlossenen Zustand des Verschlusssystems (6);
b) Lockern der Verbindung zwischen dem oberen und unteren Verschlusselement;
c) Drehen des oberen Verschlusselements bis die Aussparungen des oberen Verschlusselements (17) über den Aussparungen (20) des unteren Verschlusselements (16) liegen und es zu einer Kopplung zwischen den Innenleitungen (7a, 7b) und den Außenleitungen (14a, 14b) (Belüftungs- und Entleerungsleitung) kommt;
d) Entleeren des Tanks (2) mittels Schwerkraft oder Pumpe über die Entleerungsleitung, umfassend die Innenleitung (7a) und die Außenleitung (14a).
